Europäisches Patentamt

European Patent Office

Office européen des brevets

(11) Veröffentlichungsnummer: **0 443 168 A1**

(12) **EUROPÄISCHE PATENTANMELDUNG**

(21) Anmeldenummer: 90124707.2

(22) Anmeldetag: 19.12.90

(51) Int. Cl.⁵: **H02K 9/06**

(30) Priorität: 20.02.90 DE 4005260

(43) Veröffentlichungstag der Anmeldung:
28.08.91 Patentblatt 91/35

(84) Benannte Vertragsstaaten:
DE FR GB IT SE

(71) Anmelder: **Bayerische Motoren Werke Aktiengesellschaft**
**Patentabteilung AJ-3 Postfach 40 02 40**
**Petuelring 130**
**W-8000 München 40(DE)**

(72) Erfinder: **Rosskopf, Franz**
**Züricher Strasse 192**
**W-8000 München 71(DE)**

(54) **Luftgekühlter Generator, insbesondere hochdrehender Wechselstrom-Generator für Fahrzeuge.**

(57) Bei einem luftgekühlten Generator, insbesondere hochdrehenden Wechselstrom-Generator für Fahrzeuge, wird der Hauptstrom der Kühlluft durch die Zwischenräume der Magnetpole am Außenumfang des Rotors abgesaugt. Der Rotor dreht mit hoher Geschwindigkeiten an Stegen zwischen Kühlluft-Durchbrechungen in einem Lagerschild des Generator-Gehäuses vorbei, wodurch auf die Stege aufprallende Luftströme aus den Zwischenräumen bzw. Kühlkanälen einen dem außenseitig angeordneten Lüfterrad stark turbulent zuströmenden Kühlluftstrom verursachen mit der Folge eines erhöhten Geräusches. Zur Verminderung des Geräusches wird vorgeschlagen, dass eine Beruhigungszone (16) für die Kühlluft zwischen dem Lagerschild und einem Kühllufteintrittsbereich des Lüfterrades angeordnet ist. Mit dieser Maßnahme verringert sich das Durchströmgeräusch beträchtlich.

EP 0 443 168 A1

Die Erfindung bezieht sich auf einen luftgekühlten Generator der im Oberbegriff des Anspruches 1 beschriebenen Bauart.

Derartige Generatoren finden vorzugsweise als Drehstrom-Generatoren an Brennkraftmaschinen für Fahrzeuge Verwendung. Der Läufer bzw. Rotor eines derartigen, beispielsweise in der DE-A-35 09 467 dargestellten Generators weist am Umfang verteilt angeordnete Magnetpole auf, die im wesentlichen axial gerichtete Zwischenräume begrenzen. Beim Betrieb des Generators strömt über diese Zwischenräume der Hauptteil der den Generator durchsetzenden Kühlluft. Bei diesen Generatoren ist ferner zur Erzielung einer kurzen Baulänge ein der Lagerung des Rotors dienender Lagerschild des Generator-Gehäuses dem Rotor eng benachbart angeordnet. Dieser Lagerschild weist der Kühlluft-Führung dienende, durch Stege getrennte Durchbrechungen auf, über die die Kühlluft aus den zugleich als Kühlkanäle dienenden Zwischenräumen der Magnetpole einem außerhalb des Generator-Gehäuses angeordneten Lüfter zuströmt.

Für die aus den Zwischenräumen bzw. Kühlkanälen des drehenden Rotors austretenden Luftströme bilden jedoch die nahe dem Rotor angeordneten Stege des Lagerschildes erhebliche Strömungshindernisse. Die auf die Stege rotorseitig aufprallenden Luftströme bewirken, daß der Kühlluftstrom im weiteren stark turbulent den Fördereinrichtungen des Lüfterrades zuströmt. Dies führt in nachteiliger Weise zu einer Geräuschzunahme.

Der Erfindung liegt die Aufgabe zugrunde, für einen luftgekühlten Generator der gattungsgemäßen Bauart eine mit einfachen Mitteln ausführbare Gestaltung zur Geräuschsenkung aufzuzeigen.

Zur Lösung dieser Aufgabe wird im Kennzeichen des Anspruches 1 vorgeschlagen, daß eine Beruhigungszone für die Kühlluft zwischen dem Lagerschild und einem Kühllufteintrittsbereich des Lüfterrades angeordnet ist.

Der Vorteil der Erfindung ist, daß mit der Beruhigungszone eine Verringerung der turbulenten Strömung stromab des Lagerschildes bis zum Eintritt in das Lüfterrad und damit eine beträchtliche Geräuschabsenkung erreicht ist.

Vorteilhafte Ausgestaltungen der Erfindung sind in den Unteransprüchen beschrieben. So beschreibt Anspruch 2 einfach durchzuführende Maßnahmen zur beidseitigen axialen Begrenzung der Beruhigungszone, deren axiale Erstreckung nach einem weiteren Merkmal des Anspruches 2 zur Beibehaltung einer kurzen Baulänge des Generators auf die jeweilige Breite der im Lagerschild vorgesehenen Stege abgestellt ist. Für ein Lüfterrad mit Radial-Schaufeln wird nach Anspruch 3 zur weiteren Unterstützung der Geräuschabsenkung vorgeschlagen, daß die im Kühllufteintrittsbereich des Lüfterrades liegenden Schaufelkanten radial so weit nach außen versetzt angeordnet sind, daß die Schaufeln von dem aus den Durchbrechungen austretenden Kühlluftstrom nicht direkt angeströmt werden.

Um eine nach Anspruch 2 beispielsweise durch axiales Zurückversetzen der Stirnseite des Lagerschildes oder beispielsweise durch axiales Vorversetzen des Lüfterrades oder schließlich durch Kombination beider Maßnahmen geschaffene Beruhigungszone vor störenden Rückströmungen zu schützen, wird nach Anspruch 4 vorgeschlagen, daß die Beruhigungszone umfänglich durch einen zwischen Lagerschild bzw. Generator-Gehäuse und den Schaufeln des Lüfterrades angeordneten Ring begrenzt wird. Dieser Ring kann nach Anspruch 5 beispielsweise am Gehäuse bzw. am Lagerschild fest angeordnet sein, wobei sich diese Gestaltung in Verbindung mit einer axial zurückversetzten Stirnseite des Lagerschildes, wie oben dargelegt, anbietet. Bei einer durch axiales Absetzen des Lüfterrades vom Lagerschild gebildeten Beruhigungszone kann der o.g. Ring nach Anspruch 6 als gesondertes Bauteil ausgebildet sein, der beispielsweise bei einem nachträglich umgerüsteten Generator an dessen Gehäuse bzw. an dessen Lagerschild lösbar befestigt ist. Schließlich ist es nach Anspruch 7 aber auch denkbar, den Ring an den Schaufeln des Lüfterrades fest anzuordnen, wobei das freie Ende des Ringes mit einem Umfangsbereich des Gehäuses bzw. des Lagerdeckels eine Labyrinthdichtung bilden kann.

Anspruch 8 beschreibt schließlich eine Ausgestaltung des Generators zur Verwirklichung einer ausreichenden Beruhigungszone ohne wesentliche Vergrößerung der Gesamtbaulänge des Generators.

Ein bevorzugtes Ausführungsbeispiel der Erfindung ist in der Zeichnung dargestellt. Es zeigt:

Fig. 1    einen luftgekühlten Generator im Bereich des Lagerschildes im Schnitt,

Fig. 2    einen Ausschnitt der Stirnansicht des Lagerschildes nach Fig. 1.

Ein abschnittsweise dargestellter luftgekühlter Generator 1 umfaßt ein Gehäuse 2 mit einem darin angeordneten Stator 3. Dem Stator 3 ist mit geringem radialem Spiel ein Läufer bzw. Rotor 4 zugeordnet, der am Außenumfang über Zwischenräume 5 in Umfangsrichtung gegenseitig beabstandet angeordnete Magnete 6 aufweist. Der Rotor 4 ist mit einer Welle 7 drehfest verbunden, die in einem Lagerschild 8 des Generator-Gehäuses 2 drehbeweglich gelagert ist. Im Lagerschild 8 sind zur Welle 7 konzentrisch angeordnete, durch Stege 9 getrennte Durchbrechungen 10 vorgesehen, deren wellenferne Begrenzungen 11 auf den Außendurchmesser des Rotors 4 abgestellt sind. Die Welle 7 trägt schließlich in ihrem freien Endbereich ein Radial-Lüfterrad 12 mit im äußeren Bereich einer Scheibe 13 dem Lagerschild 8 zugewandt angeordneten Schaufeln 14.

Zur inneren Kühlung des Generators 1 wird dieser von durch das Lüfterrad 12 angesaugter Luft durchströmt. Dabei durchströmt der Hauptteil des Kühlluftstromes die von den Magneten 6 begrenzten Zwischenräume 5 im Rotor 4. Die im wesentlichen axial gerichteten Zwischenräume 5 dienen somit als Kühlkanäle. Aus den Kühlkanälen 5 des drehenden Rotors 4 austretende Luftströme fließen über die Durchbrechungen 10 im Lagerschild 8 direkt dem Lüfterrad 12 zu. Aus anderen Kühlkanälen 5 austretende Luftströme treffen jedoch auf die Stege 9 zwischen zwei benachbarten Durchbrechungen 10. Da zur Erzielung einer kurzen Baulänge des Generators 1 der Lagerschild 8 mit den Stegen 9 dem Rotor 4 eng benachbart angeordnet ist, verursachen die auf die Stege 9 aufprallenden Luftströme im weiteren einen stark turbulent den Schaufeln 14 des Lüfterrades 12 zuströmenden Kühlluftstrom. Der stark turbulente Kühlluftstrom bewirkt einen erhöhten Geräuschpegel.

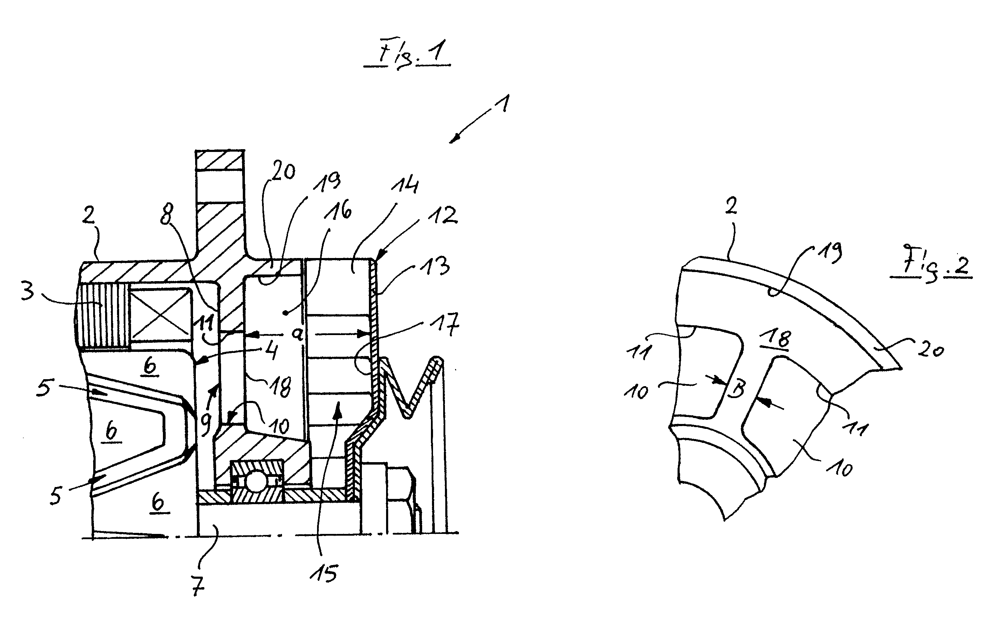

Zur Absenkung dieses Geräuschpegels ist zur Verringerung der Turbulenz in der Kühlluft für diese zwischen dem Lagerschild 8 und einem Kühllufteintrittsbereich 15 des Lüfterrades 12 eine Beruhigungszone 16 angeordnet. Um die Gesamtbaulänge des Generators 1 mit dem Lüfterrad 12 nicht wesentlich zu vergrößern, ist die Beruhigungszone 16 lagerschild- und lüfterradseitig von im wesentlichen ebenen Radialbereichen 17 und 18 des Lüfterrades 12 bzw. des Lagerschildes 8 begrenzt, wobei der axiale Abstand "a" der Radialbereiche 17 und 18 relativ zur Breite "B" der Stege 9 (Fig. 2) zwischen den Durchbrechungen 10 gewählt ist. Der lagerschildseitige Radialbereich 18 ist Teil einer im Lagerschild 8 angeordneten ringförmigen Vertiefung 19. Der lüfterradseitige Radialbereich 17 ist Teil der zusätzlich axial vom Lagerschild abgesetzt angeordneten Scheibe 13 des Lüfterrades 12. Schließlich ist die Beruhigungszone 16 umfänglich durch einen Ring 20 der Vertiefung 19 begrenzt. Der Ring 20 ist am Gehäuse 2 bzw. am Lagerschild 8 einstückig angeordnet, wobei das freie Ende des Ringes 20 um ein vorbestimmtes Axialspiel von den Schaufeln 14 des Lüfterrades 12 beabstandet ist. Wie aus Fig. 1 hervorgeht, ist der Ring 20 von relativ geringer radialer Wandstärke und lediglich dem äußeren Radialbereich der Schaufeln 14 des Lüfterrades 12 benachbart zugeordnet. Der Ring 20 dient dazu, daß durch das Lüfterrad 12 bereits abgeschleuderte Kühlluft nicht in die Beruhigungszone 16 zurückströmt. Um den Kühlluftstrom im Kühllufteintrittsbereich 15 des Lüfterrades 12 nicht wesentlich zu stören, erstrecken sich die Schaufeln 14 des Laufrades 12 lediglich über einen von Kühlluft-Durchbrechungen 10 freien Bereich des Lagerschildes 8.

Der vorgenannte Ring 20 kann auch als gesondertes Bauteil gestaltet sein und am Gehäuse 2 bzw. am Lagerschild 8 beispielsweise durch Klipsen lösbar befestigt werden.

Weiter ist es denkbar, den Ring an den Schaufeln des Lüfterrades anzuordnen, wobei der Ring über sein freies Ende mit einem Umfangsbereich des Gehäuses bzw. des Lagerdeckels eine Labyrinthdichtung bilden kann.

Der die Beruhigungszone 16 umfänglich begrenzende Ring 20 bzw. in einer der weiteren vorgenannten Ausführungen dient nicht nur der Verhinderung einer die Beruhigungszone 16 störenden Rückströmung von bereits geförderter Kühlluft. Sein weiterer Vorteil ist in der Möglichkeit einer zweckmäßigen Abstimmung der Schaufeln 14 des Lüfterrades 12 bzgl. deren axialer Erstreckung zu sehen. Damit können zur Überdeckung der Beruhigungszone 16 übermäßig breite und damit in mehrfacher Hinsicht nachteilige Schaufeln 14 des Lüfterrades 12 vermieden werden.

## Patentansprüche

1. Luftgekühlter Generator, insbesondere hochdrehender Wechselstrom-Generator für Fahrzeuge,
   - mit einem im Lagerschild (8) eines Gehäuses (2) gelagerten Rotor (4) mit axialen, dem Lagerschild benachbart endenden Kühlkanälen (5), und
   - mit im Lagerschild angeordneten, durch Stege (9) getrennte Durchbrechungen (10), über die
   - Kühlluft aus den Rotor-Kühlkanälen (5) austritt zu einem außerhalb des Gehäuses dem Lagerschild benachbart angeordneten Lüfterrad (12), dadurch gekennzeichnet,
   - daß eine Beruhigungszone (16) für die Kühlluft zwischen dem Lagerschild (8) und einem Kühllufteintrittsbereich (15) des Lüfterrades (12) angeordnet ist.

2. Generator nach Anspruch 1,
   dadurch gekennzeichnet,
   - daß die Beruhigungszone (16) lagerschild- und lüfterradseitig von im wesentlichen ebenen Radialbereichen (17,18) begrenzt und
   - der axiale Abstand (a) der Radialbereiche (17,18) relativ zur Breite (B) der Stege (9) zwischen den Durchbrechungen (10) gewählt ist.

3. Generator nach Anspruch 1 und 2,
   - mit einem Radial-Lüfterrad (12) mit im äußeren Bereich einer Scheibe (13) dem Lagerschild (8) zugewandt angeordneten Schaufeln (14), dadurch gekennzeichnet,

- daß die Schaufeln (14) sich über einen von Kühlluft-Durchbrechungen (10) freien Bereich des Lagerschildes (8) erstrecken.

4. Generator nach den Ansprüchen 1 bis 3, dadurch gekennzeichnet, daß bei einem Radial-Lüfterrad (12) mit Schaufeln (14) von einer gegenüber der axialen Erstreckung (a) der Beruhigungszone (16) geringeren Breite ein die Beruhigungszone (16) umfänglich begrenzender Ring (20) vorgesehen ist.

5. Generator nach den Ansprüchen 1 bis 4, dadurch gekennzeichnet, daß der Ring (20) am Gehäuse (2) bzw. am Lagerschild (8) angeordnet ist, wobei das freie Ende des Ringes um ein vorbestimmtes Axialspiel von den Schaufeln (14) des Lüfterrades (12) beabstandet ist.

6. Generator nach den Ansprüchen 1 bis 5, dadurch gekennzeichnet,
- daß der Ring als gesondertes Bauteil von relativ geringer radialer Wandstärke gestaltet ist, und
- daß der Ring am Gehäuse (2) bzw. Lagerschild (8) lösbar (z.B. Klipsen) angeordnet ist.

7. Generator nach den Ansprüchen 1 bis 5, dadurch gekennzeichnet, daß der Ring an den Schaufeln (14) des Lüfterrades (12) angeordnet ist, und
- über sein freies Ende mit einem Umfangsbereich des Gehäuses (2) bzw. des Lagerschildes (8) eine Labyrinthdichtung bildet.

8. Generator nach den Ansprüchen 1 bis 7, dadurch gekennzeichnet,
- daß die Beruhigungszone (16) gebildet ist aus einer im Lagerschild (8) im Bereich der durch Stege (9) getrennten Durchbrechungen (10) angeordneten ringförmigen Vertiefung (19), und
- aus einer vom Lagerschild (8) zusätzlich axial versetzten Anordnung des Radial-Lüfterrades (12), wobei
- die umfängliche Begrenzung der Beruhigungszone (16) ein lediglich dem äußeren Radialbereich der Schaufeln (14) des Lüfterrades (12) benachbarter Ring (20) bildet.

Fig. 2

Fig. 1

| | | | |
|---|---|---|---|

**Europäisches Patentamt**

## EUROPÄISCHER RECHERCHENBERICHT

Nummer der Anmeldung

## EP 90 12 4707

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-B-2 406 489 (DR.-ING.HABIL.K.TARDEL)<br>* Anspruch 1; Figur 3 *<br>- - - | 1,2,4,6 | H 02 K 9/06 |
| A | CH-A-6 074 20 (MINI MOTOR S.R.L.)<br>* Spalte 2, Zeilen 39 - 45; Figur 1 *<br>- - - | 1 | |
| A,A,D | FR-A-2 561 464 (VALEO MOTOROLA ALTERNATEURS)<br>* Seite 2, Zeilen 21 - 34; Figuren 1-3 & DE-A-3509467 *<br>- - - | 1 | |
| A | DE-B-1 190 093 (C.F.SCHEER & CIE.)<br>* Spalte 4, Zeilen 22 - 25; Figur 1 *<br>- - - - - | 1 | |

| | |
|---|---|
| | RECHERCHIERTE SACHGEBIETE (Int. Cl.5) |
| | H 02 K |

Der vorliegende Recherchenbericht wurde für alle Patentansprüche erstellt

| Recherchenort | Abschlußdatum der Recherche | Prüfer |
|---|---|---|
| Berlin | 17 April 91 | LEOUFFRE M. |